# EUROPEAN PATENT SPECIFICATION

(11) **EP 0 410 672 B1**
(45) Date of publication and mention of the grant of the patent: **05.10.1994**
(21) Application number: 90308051.3
(22) Date of filing: 23.07.1990
(51) Int. Cl.: B60B 21/10

(54) **Wheel rim for pneumatic vehicle tyre**
Radfelge eines Kraftfahrzeugreifens
Jante de roue pour pneumatiques de véhicule automobile

(30) Priority: 25.07.1989 DE 3924600
(43) Date of publication of application: 30.01.1991
(73) Proprietor: SP REIFENWERKE GMBH, 63450 Hanau (DE)
(72) Inventor: Glotzbach, Klaus-Dieter, D-6457 Maintal 1 (DE)
(74) Representative: Stewart, Charles Geoffrey

(56) References cited:
- EP-A- 0 170 085
- EP-A- 0 176 647
- EP-A- 0 377 338
- GB-A- 2 064 446

## Description

The invention relates to a wheel rim for pneumatic vehicle tyres comprising a central part having a well and bead receiving regions disposed on both sides of the central part which are bounded towards the outside by rim flanges and merge in the direction towards the well rim into inclined ramp surfaces, wherein a ring like projection or hump which is at least regionally formed in a circumferential direction is provided at least in the transition region between one bead seat and the ramp surface associated with the latter.

Wheel rims of this kind are known and form, in conjunction with the associated tyre, as a result of the hump that is provided, a retaining system which ensures that even with reduced pressure within the tyre the latter is still held on the rim, and thus that safety is increased. For example such a wheel rim qualifying as prior art under the terms of Articles 54(3) and 54(4) EPC is disclosed by European Patent publication EP-A-0377338.

A wheel rim according to the preamble of claim 1 is known from EP-A-0 170 085.

It is an object of the invention to further develop a tyre rim of the described kind in a manner which can be simply realised without making it more difficult to install the particular tyre so that the tyre retaining capability of the rim with reduced internal tyre pressure is considerably improved. The rim should also be compatible with all series production tyres.

The object is satisfied in accordance with the invention essentially in that the hump diameter (D_{H}) at least on the outer rim side is the same as or larger than the corner diameter (D) of the bead seat surface measured at the base point of the rim flange and in that a ramp surface is associated with the hump which, starting from the rim well side, has a steeper portion extending at a first steep angle and then subsequently a shallower portion extending at a second angle which is substantially shallower in comparison to the first angle and the transition from the steeper portion to the shallower portion is disposed radially substantially within the line of intersection of the ramp surface and the notional extension of the bead seat surface and the hump is curved and has a radius on the side which is nearest to the rim flange which is smaller than the radius on the side nearest to the well.

Preferably the rim shape is used at both bead seats.

As a result of this layout of the wheel rim it is possible with series production tyres to reduce the internal tyre pressure at which the tyre is dislodged from the rim by about 40 to 60%, which leads to a considerable increase in safety. It is of particular importance with this arrangement that the fitting or seating pressure which is necessary during installation of the tyre to transfer the tyre bead onto its associated bead seat is not increased despite the increased hump. As a result of the special layout of the ramp surfaces tuis is achieved and thus no danger exists of damaging the tyre or bead reinforcement core on fitting.

The steeper section of the ramp surface preferably extends at an angle of approximately 10° to a vertical or circumferential plane of the rim and the shallower portion extends at an angle of 45° relative to a vertical or circumferential plane of thee rim.

The hump radius at the side of the rim flange is preferably only half as large as that at the side of the well and a hump free region of preferably about 300 mm is respectively provided on both side of the valve to avoid damage to the tyre beads during tyre removal.

In a particularly advantageous embodiment of the invention a circumferentially extending groove is provided at the well side and adjoining the hump associated with the bead set for the accommodation of a tyre bead toe, and in this arrangement the depth of the groove is selected to be smaller, related to the diameter at the base point of the rim flange than 4 mm being in particular 3.3 mm, and this groove is bounded at the rim well side by a second hump with the ramp surface having a steeper and shallower portion being associated with the second hump.

By means of this layout of the invention it is possible to maximise the brake space, i.e. the space available within the wheel for accommodating the brake, since the groove which receives the bead toe extends with the largest possible radius but nevertheless fully satisfies the requirements to provide an effective tyre retaining system.

In comparison to known tyre retaining systems with circumferentially extending grooves for receiving the bead toe the receiving groove of the invention is, on the one hand formed as a raised shallow groove, which is important to maximise the braking space, and, on the other hand, an elevated hump is provided at the rim well side, the use of which is again possible as a result of the special layout of the ramp surfaces.

In this way it is possible to position both conventional tyres and also special tyres which have a special bead toe on the rim with absolute safety, and at the same time to preclude any form of faulty installation and also any danger of loosening and of air loss.

The diameter of the further hump is preferably at least substantially the same as the diameter of the hump associated with the bead seat surface, and the radius of curvature of this further hump is preferably smaller than the radius of curvature of the hump associated with the bead seat surface.

Further particular advantageous features of the invention are set forth in the subordinate claims. Embodiments of the invention will now be explained, by way of example only, with reference to the drawings in which:-
Fig.1. is a schematic representation of the shape of the rim contour at the outer side of the rim and
Fig.2. is a schematic representation of the shape of the rim contour in accordance with a second embodiment of the invention in which a circumferential groove is provided to receive a bead toe.

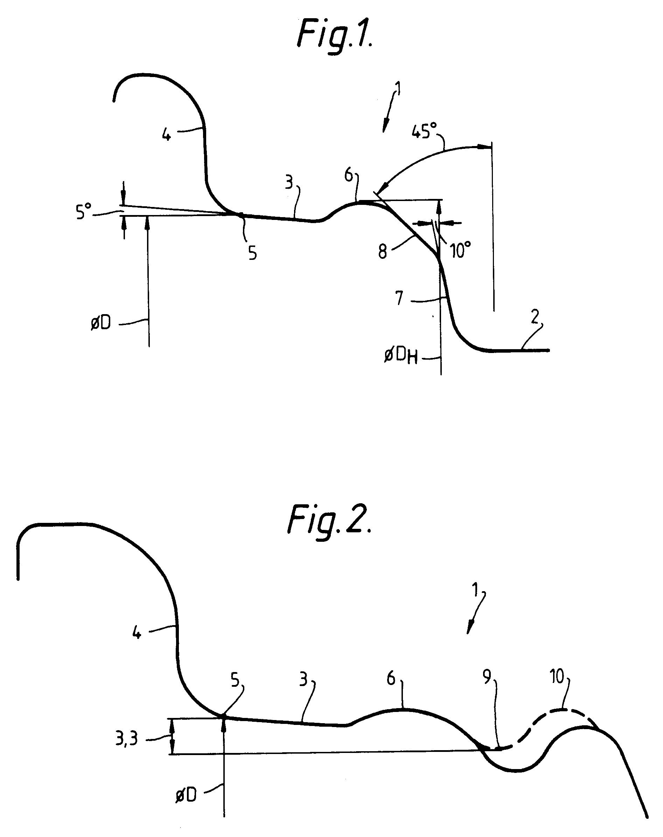

Fig.1. shows the outer side of a wheel rim 1 with a rim well 2, a bead receiving surface 3 and a rim flange 4. The rim flange 4 merges at a base point 5, which lies on a diameter D, into the flat bead seat surface 3 which extends at an inclined angle of 5°.

A hump 6 which extends at least around the majority of the circumference adjoins the bead seat surface 3 towards the rim well 2. The hump diameter D_{H} is larger than the diameter D at the base point 5. This ensures that with series production tyres the internal tyre pressure at which throw off or dislodgement of the tyre occurs can be reduced by about 40 to 60% compared to a standard wheel rim.

In most arrangements the hump (6) extends completely around the wheel rim but, in some embodiments to improve "button-holing" or fitting the tyre of the tyre over the flanges, a short region of the rim may have no hump. This region is preferably opposite the valve in the wheel and is provided at both sides of the wheel.

A rim of the kind shown here is compatible with all series production tyres.

The hump radius at the side of the rim flange 4 amounts to approximately 4 mm whereas it amounts to approximately 8 mm at the wheel side. the rim well side reduction of the hump radius is advantageous with respect to the operation of this tyre retaining system.

The hump diameter D_{H} is increased by at least Jmm in comparison to known arrangements which would lead to a considerable deterioration of the work of fitting the tyres if the ramps were not specially shaped in accordance with the invention, namely in the form of a steeper portion 7 and a shallower portion 8. The steeper portion extends at an angle of 10° relative to the circumferential plane of the tyre, whereas the shallower portion 8 subtends an angle of 45° with this plane. This layout of the ramp surfaces provides for the fitting or installing and correct positioning or seating of all associated kinds of tyres without increasing the fitting pressure required.

Fig.2 shows a particular advantageous layout of the invention in which a circumferentially extending groove is provided at the well side adjoining the hump associated with the bead seat surface in order to receive a particular tyre bead toe. The full line shows a configuration which is known, at least in basic concept. In this known basic configuration the hump at the rim well side lies at a substantially smaller diameter than the hump 6. Also the groove 9 which accommodates the tyre toe, has a depth which leads to a substantial restriction of the brake space inside the wheel.

In accordance with the invention, which is characterised by the broken line which is shown, the groove 9, is on the one hand, formed as a raised shallow groove and, on the other hand the hump 10 at the rim well side is made substantially higher. This also results in a displacement of both the lowest point of the groove 9 and of the highest point of the hump 10 in the direction of the bead seat surface 3.

It is important for the layout of the invention that as result of the groove 9 which lies at a larger radius the space available on the inside of the wheel to accommodate the brake is substantially increased and that through the increased height of the hump 10 the efficiency and functional performance of the entire tyre retaining system is improved. The increased height of the hump 10 is again possible through the special layout of the ramp surfaces which has already described in connection with Fig.1 in the form of a steeper portion and a shallower portion. The functions and advantages described in this respect in conjunction with Fig.1. also apply to the embodiment of Fig.2.

Both conventional tyres and also special tyres with retaining toes which engage in the groove 9 can be installed on a rim of the kind shown in Fig.2 and as result of this layout of the rim a reliable seating of the bead is always ensured, no danger of faulty installation or of air loss exists and thus no requirements have to be specified which must be specially observed during tyre fitting.

The described layout can be provided both for one side of the rims and also at both sides. In all installed tyres the internal tyre pressure at which the tyre is dislodged is quite substantially lowered, and with tyres with a retaining toe it is indeed possible to reduce this internal tyre pressure at which tyre dislodgement occurs to approximately 0.3 bars.

## Claims

1. A wheelrim for pneumatic tyres comprising a central part having a well and bead receiving regions disposed on each side of the central part which are bounded towards the outside by rim flanges and merge in the direction towards the well rim to inclined ramp surfaces, wherein a ring like projection or hump which is at least regionally formed in a circumferential direction is provided at least in the transition region between one bead seat and the ramp surface associated with the latter, and the hump diameter (D_{H}) at least at the outer rim side (1) is the same as or larger than the corner diameter (D) of the bead seat surface (3) measured at the base point (5) of the rim flange (4) and in that a ramp surface (7,8) is associated with the hump (6) which, starting from the rim well side, has a steeper portion (7) extending at a first steep angle and then subsequently a shallower portion (8) extending at a second angle which is substantially shallower in comparison to the first angle characterised in that the transition from the steeper portion (7) to the shallower portion (8) is disposed radially substantially within the line of intersection of the ramp surface (7,8) and the notional extension of the bead seat surface (3) wherein the hump (6) is curved and has a radius on the side which is nearest to the rim flange (4) which is smaller than the radius on the side nearest to the well (2).

2. A wheelrim in accordance with claim 1, characterised in that the steeper section (7) of the ramp surface extends at a first angle of approximately 10° relative to a vertical or circumferential plane and the shallower portion (8) of the ramp surface extends at a second angle of approximately 45° relative to a vertical or circumferential plane.

3. A wheelrim in accordance with claim 1 or 2, characterised in that the transition between the steeper portion (7) and the shallower portion (8) is rounded.

4. A wheelrim in accordance with any of the preceding claims, characterised in that the curvature of the hump (6) has a radius on the side which is nearest to the rim flange (4) which is approximately only half as large as the radius on the side nearest to the well (2).

5. A wheelrim in accordance with any of the preceding claims, characterised in that hump free regions are provided at both sides of the valve.

6. A wheelrim in accordance with any of the preceding claims, wherein a peripherally extending groove for receiving a tyre bead toe is provided at the well side of and adjacent to the hump associated with the bead seat, characterised in that the depth of the groove (9) related to the diameter (d) at the base point (5) of the rim flange (4) is smaller than 4mm, in that the groove (3) is bounded at the well side by a further hump (10). and in that the ramp surface with the steeper portion (7) and the shallower portion (8) is associated with this further hump (10).

7. A wheelrim in accordance with claim 6 characterised in that the groove depth is 3.3mm.

8. A wheelrim in accordance with claim 6 or 7 characterised in that the diameter of the further hump (10) is at least substantially the same as the diameter of the hump (6) associated with the bead seat surface (3).

9. A wheelrim in accordance with any of claims 6-8 characterised in that the radius of curvature of the further hump (10) is smaller than the radius of curvature of the hump (6) associated with the bead seat surface (3).

## Patentansprüche

1. Eine Radfelge für Luftreifen mit einem Mittelteil, der ein Bett hat, und an jeder Seite des Mittelteils angeordneten Wulstaufnahmebereichen, die zu der Außenseite durch Felgenflansche begrenzt sind und in der Richtung zu dem Felgenbett in geneigte Rampenflächen übergehen, worin ein ringförmiger Vorsprung oder Hump, der zumindest örtlich in einer Umfangsrichtung ausgebildet ist, zumindest in dem Übergangsbereich zwischen einem Wulstsitz und der dem letzteren zugeordneten Rampenfläche vorgesehen ist, und der Humpdurchmesser (D_{H}) zumindest an der äußeren Felgenseite (1) derselbe ist wie oder größer ist als der Eckendurchmesser (D) der Wulstsitzfläche (3) gemessen an dem Basispunkt (5) des Felgenflansches (4), und eine Rampenfläche (7, 8) dem Hump (6) zugeordnet ist, die beginnend von der Felgenbettseite einen steileren Bereich (7), der sich unter einem ersten steilen Winkel erstreckt, und dann anschließend einen flacheren Bereich (8), der sich unter einem zweiten Winkel erstreckt, der wesentlich flacher im Vergleich zu dem ersten Winkel ist, hat,
dadurch gekennzeichnet, daß
der Übergang von dem steileren Bereich (7) zu dem flacheren Bereich (8) in Radialrichtung im wesentlichen innerhalb der Überschneidungslinie der Rampenfläche (7, 8) und der imaginären Verlängerung der Wulstsitzfläche (3) liegt, worin der Hump (6) gekrümmt ist und einen Radius an der Seite, die am nächsten zu dem Felgenflansch (4) ist, hat, der kleiner ist als der Radius an der am nächsten zu dem Bett (2) liegenden Seite.

2. Eine Radfelge nach Anspruch 1, dadurch gekennzeichnet, daß der steilere Abschnitt (7) der Rampenfläche sich unter einem ersten Winkel von etwa 10° relativ zu einer Vertikal- oder Umfangsebene erstreckt und der flachere Bereich (8) der Rampenfläche sich unter einem zweiten Winkel von etwa 45° relativ zu einer Vertikal- oder Umfangsebene erstreckt.

3. Eine Radfelge nach Anspruch 1 oder 2, dadurch gekennzeichnet, daß der Übergang zwischen dem steileren Bereich (7) und dem flacheren Bereich (8) abgerundet ist.

4. Eine Radfelge nach irgendeinem der vorhergehenden Ansprüche, dadurch gekennzeichnet, daß die Krümmung des Humps (6) einen Radius an der Seite, die am nächsten zu dem Felgenflansch (4) liegt, hat, der etwa halb so groß wie der Radius an der am nächsten zu dem Bett (2) liegenden Seite ist.

5. Eine Radfelge nach irgendeinem der vorhergehenden Ansprüche, dadurch gekennzeichnet, daß humpfreie Bereiche an beiden Seiten des Ventils vorgesehen sind.

6. Eine Radfelge nach irgendeinem der vorhergehenden Ansprüche, worin eine sich in Umfangsrichtung erstreckende Rille zur Aufnahme einer Reifenwulstzehe an der Bettseite von und neben dem Hump, der dem Wulstsitz zugeordnet ist, vorgesehen ist, dadurch gekennzeichnet, daß die Tiefe der Rille (9) bezogen auf den Durchmesser (d) an dem Basispunkt (5) des Felgenflansches (4) kleiner als 4 mm ist, daß die Rille (3) an der Bettseite durch einen weiteren Hump (10) begrenzt ist und daß die Rampenfläche mit dem steileren Bereich (7) und dem flacheren Bereich (8) diesem weiteren Hump (10) zugeordnet ist.

7. Eine Radfelge nach Anspruch 6, dadurch gekennzeichnet, daß die Rillentiefe 3,3 mm beträgt.

8. Eine Radfelge nach Anspruch 6 oder 7, dadurch gekennzeichnet, daß der Durchmesser des weiteren Humps (10) im wesentlichen zumindest derselbe wie der Durchmesser des Humps (6) ist, welcher der Wulstsitzfläche (3) zugeordnet ist.

9. Eine Radfelge nach irgendeinem der Ansprüche 6 bis 8, dadurch gekennzeichnet, daß der Krümmungsradius des weiteren Humps (10) kleiner als der Krümmungsradius des Humps (6), welcher der Wulstsitzfläche (3) zugeordnet ist, ist.

## Revendications

1. Jante de roue pour pneumatique, comprenant une partie centrale ayant une cavité et des régions de logement de talon disposées de part et d'autre de la partie centrale et qui sont délimitées vers l'extérieur par des flasques de jante et se raccordent vers la cavité à des surfaces inclinées de rampe, dans laquelle une bosse ou saillie de forme annulaire réalisée au moins localement en direction circonférentielle est placée au moins dans la région de transition entre un siège de talon et la surface de rampe associée à ce siège, et le diamètre de la bosse (D_{H}), au moins du côté externe (1) de la jante, est égal ou supérieur au diamètre (D) de coin de la surface de siège de talon (3) mesuré au point de base (5) du flasque (4) de la jante, et une surface de rampe (7, 8) est associée à la bosse (6) et possède, depuis le côté de la cavité de la jante, une partie relativement abrupte (7) ayant une premier angle d'inclinaison élevée puis une partie moins inclinée (8) faisant un second angle nettement inférieur au premier angle, caractérisée en ce que la transition de la partie relativement abrupte (7) à la partie moins inclinée (8) est disposée radialement pratiquement sur l'axe d'intersection de la surface de la rampe (7, 8) et du prolongement théorique de la surface de siège de talon (3), la bosse (6) étant courbe et ayant un rayon, du côté le plus proche du flasque (4) de la jante, qui est plus faible que le rayon du côté le plus proche de la cavité (2).

2. Jante de roue selon la revendication 1, caractérisée en ce que le tronçon (7) relativement abrupt de la surface de rampe forme un premier angle d'environ 10° avec un plan vertical ou circonférentiel, et la partie moins inclinée (8) de la surface de rampe forme un second angle d'environ 45° avec un plan vertical ou circonférentiel.

3. Jante de roue selon la revendication 1 ou 2, caractérisée en ce que la transition entre la partie relativement abrupte (7) et la partie moins inclinée (8) est arrondie.

4. Jante de roue selon l'une quelconque des revendications précédentes, caractérisée en ce que la courbure de la bosse (6) a un rayon, du côté le plus proche du flasque (4) de la jante, qui est à un peu près égal à la moitié seulement du rayon du côté le plus proche de la cavité (2).

5. Jante de roue selon l'une quelconque des revendications précédentes, caractérisée en ce que des régions sans bosses sont formées de part et d'autre de la valve.

6. Jante de roue selon l'une quelconque des revendications précédentes, dans laquelle une gorge périphérique destinée à loger une pointe de talon de pneumatique est placée du côté de la bosse tourné vers la cavité et près de cette bosse associée au siège de talon, caractérisée en ce que la profondeur de la gorge (9) qui est liée au diamètre (d) au point de base (5) du flasque (4) de la jante est inférieure à 4 mm, en ce que la gorge (3) est délimitée du côté de la cavité par une bosse supplémentaire (10), et la surface de rampe ayant la partie relativement abrupte (7) et la partie moins inclinée (8) est associée à cette bosse supplémentaire (10).

7. Jante de roue selon la revendication 6, caractérisée en ce que la profondeur de la gorge est de 3,3 mm.

8. Jante de roue selon la revendication 6 ou 7, caractérisée en ce que le diamètre de la bosse supplémentaire (10) est au moins pratiquement le même que le diamètre de la bosse (6) associée à la surface (3) du siège de talon.

9. Jante de roue selon l'une des revendications 6 à 8, caractérisée en ce que le rayon de courbure de la bosse supplémentaire (10) est inférieur au rayon de courbure de la bosse (6) qui est associée à la surface (3) du siège de talon.
